# EUROPEAN PATENT SPECIFICATION

(11) **EP 2 098 966 B1**
(45) Date of publication and mention of the grant of the patent: **13.07.2011**
(21) Application number: 08104957.9
(22) Date of filing: 04.08.2008
(51) Int. Cl.: G06F 17/30

(54) **Spatial correlation between display of data and display of applicable processing actions**
Raumkorrelation zwischen der Anzeige von Daten und der Anzeige von anwendbaren Verarbeitungsaktionen
Corrélation spatiale entre l'affichage de données et l'affichage d'actions de traitement applicables

(43) Date of publication of application: 09.09.2009
(73) Proprietor: Agilent Technologies, Inc., Santa Clara CA 95051 (US)
(72) Inventor: Jaeger, Rainer Agilent Technologies R&D and Marketing GmbH & CO.KG, 76337 Waldbronn (DE); Honsberg, Ralf Agilent Technologies R&D and Marketing GmbH & CO.KG, 76337 Waldbronn (DE); Drouen, Anton Agilent Technologies R&D and Marketing GmbH & Co., KG, 76337 Waldbronn (DE)
(74) Representative: Barth, Daniel Mathias

(56) References cited:
- EP-A- 1 491 989
- GB-A- 2 422 758
- US-A1- 2006 028 471
- US-B1- 7 162 701

## Description

### BACKGROUND ART

The present invention relates to a data display system.

Measurement instruments are applied to execute various measurement tasks in order to measure any kind of physical parameter. As a result of a measurement, measurement data is output by the measurement instrument. Such measurement data may include values of physical parameters such as concentrations of components of a sample, intensity values of a fluorescence measurement, etc. This information can be displayed to a user via a graphical user interface for evaluation of the data. An example for such a measurement instrument is a liquid chromatography device, optionally coupled with a mass spectroscopy device (for instance the 1100 Series LC/MSD of Agilent Technologies).

For the processing of such measurement data, a user interface may be provided for displaying a large number of data items to a user. However, it may be difficult for a user to operate user interfaces when handling a large amount of data.

GB 2422758 A discloses presenting data in an operations support system. A user is present with a list of aspects of a network for which graphical displays are available and allowed to select an aspect for which a graphical display is desired. A default graphic is displayed based on the user's selection. Thereafter, when the user performs a predetermined process, a list of available alternative graphic types and/or related data sources is displayed based on the data used to generate the graphic. When the user selects an alternative graphic and/or related data set from the displayed list, displaying another graphic based on the user's selection.

### DISCLOSURE

It is an object of the invention to provide an intuitive user interface. The object is solved by the independent claims. Further embodiments are shown by the dependent claims.

According to an exemplary embodiment, a device for processing (for instance editing or evaluating) a displayed multidimensional set of data (such as a chromatogram obtained from a liquid chromatography experiment) formed by a plurality of data items (such as different signal portions, for instance different peaks or different portions of a baseline) is provided, the device comprising a pointer selection determining unit adapted for determining a selected one of the plurality of data items presently selected by a pointer (such as a computer mouse pointer or a cursor) operable by a user, a processing action determining unit adapted for determining a number of applicable (such as actions which are reasonable in view of the present context) processing actions which are applicable for the selected data item and which can be selected by the user for processing the selected data item, and a processing action display unit adapted for displaying a selection area having a number of selection segments (such as an integration rudder) each selectable by the pointer for activating a respective processing action, wherein each of the selection segments represents one of the determined number of applicable processing actions, wherein the selection segments are displayed with a spatial correlation between a respective processing action represented by a respective one of the selection segments and one of the data items corresponding to the respective processing action (for instance for intuitively correlating the content of a respective action to an assigned section of the data set).

According to another exemplary embodiment, a method of processing a displayed multidimensional set of data formed by a plurality of data items is provided, the method comprising determining a selected one of the plurality of data items presently selected by a pointer operable by a user, determining a number of applicable processing actions which are applicable for the selected data item and which can be selected by the user for processing the selected data item, and displaying a selection area having a number of selection segments each selectable by the pointer for activating a respective processing action, wherein each of the selection segments represents one of the determined number of applicable processing actions, wherein the selection segments are displayed with a spatial correlation between a respective processing action represented by a respective one of the selection segments and one of the data items corresponding to the respective processing action.

According to still another exemplary embodiment, a software program or product is provided, preferably stored on a data carrier, for controlling or executing the method having the above mentioned features, when run on a data processing system such as a computer.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied in the context of data display. The data display scheme according to an embodiment of the invention can be performed or assisted by a computer program, i.e. by software, or by using one or more special electronic optimization circuits, i.e. in hardware, or in hybrid form, i.e. by means of software components and hardware components.

The term "multidimensional set of data" may particularly denote any set of data which can be displayed on a two-dimensional display area. For instance, such data may include tuples, triples, etc. of data elements which can be displayed as a two-dimensional graph, a three-dimensional surface, etc. In other words, there may be a correlation between data points on one axis and data points on another axis in a multidimensional, for instance Cartesian, coordinate system.

The term "data item" may particularly denote a component, portion or section of the multidimensional set of data. For example, the multidimensional set of data may be formed by a plurality of data items which, in combination, constitute the multidimensional set of data. Such data items may be individual data points, may be one dimensional straight or curved sections of a graph, may be delimited area portions of a three-dimensional surface, etc.

The term "pointer selection determining unit" may particularly denote an entity which has processing capabilities and which may analyze a present position or pointer operation input by a user to determine which of multiple data items a user presently desires to select. For instance, when a mouse pointer controlled by a user is moved towards a graph on a visual display, the pointer selection determining unit may analyze the motion and/or position and/or acceleration of the pointer to determine which part of the set of data the user presently intends to operate.

The term "processing action determining unit" may particularly denote an entity having processing capabilities which determines which processing actions are subsequently feasible to be selected by a user in view of a present position of a pointer. For example, when a mouse pointer controlled by a user approaches a graph, the processing action determining unit may estimate a number of reasonable operations which a user might probably select in the following. Such a machine-based preselection may depend on a number of available actions offered by a data processing system and may be correlated to the previously selected data items the user probably wishes to process or highlight.

The term "applicable processing actions" may particularly denote a number of "reasonable" processing actions. "Reasonable" processing actions should be reasonable from the point of view of a specific data item selected by a user. For instance, when a user approaches a peak in a two-dimensional graph, it may be considered reasonable or applicable or feasible or possible to perform a function related to the detection or simulation of a peak. When a user, in contrast to this, approaches a baseline portion of a two-dimensional graph, it is possible that the user wishes to perform some baseline operation, for instance a baseline estimation. In such a scenario, it is not likely or applicable or reasonable that a user intends to manipulate a peak. One or more criteria may be applied for taking the decision which processing actions appear to be applicable and which not, in view of a selected data item.

The term "processing action display unit" may particularly denote an entity which may have processing capabilities and which may generate a virtual element on a display screen having different control panels each of which being assigned to a respective one of the applicable processing actions. These segments may be displayed in an intuitive manner since their position on the screen may be correlated functionally and/or intuitively with the function provided when selecting a corresponding selection segment.

According to an exemplary embodiment, an intuitive user interface may be provided which allows for an intelligent support of a user who is editing, analyzing or processing in another manner a multidimensional set of data, for instance measurement data. By a processor based analysis of a current position of a pointer operable by a user on a screen, the system may involve technical considerations for selecting likely and technically reasonable operations which a user could probably select in the following in view of the present operation of the pointer. Thus, the system will not only select applicable processing actions in a context-related manner, but may additionally position individual control panels on a screen for allowing to select, by a user, any individual one of the different applicable processing actions in an intuitive manner by spatially correlating the position of a corresponding selection segment and a position of a portion of the set of data to be processed, analyzed or edited by the respective processing action. For instance, a baseline operation for editing a graph may be displayed on a lower portion of the selection area, since a baseline usually relates to a lower portion of a graph. In contrast to this, peak analysis functions may be displayed on an upper portion of the selection area, since such peaks are usually maximum values of a graph, i.e. located in an upper portion of the graph. Merging functions for merging several peaks of a graph may be displayed at a position between adjacent peaks, thereby allowing a user to intuitively select the desired processing action.

In the following, further exemplary embodiments of the device will be explained. However, these embodiments also apply to the method, the software program and the software product.

In an embodiment, the processing action display unit may be adapted for displaying the selection segments with a spatial correlation between a respective processing action represented by a respective one of the selection segments and the selected one of the data items. In such an embodiment, the selected data item may be taken as a central basis for the decision which processing actions are likely in the following.

Additionally or alternatively, the processing action display unit may be adapted for displaying the selection segments with a spatial correlation between a respective processing action represented by a respective one of the selection segments and another one, i.e. a non-selected one, of the data items. In such an embodiment, the system may take into account data items which are presently not selected but which have, for instance, any correlation with the selected data item, for instance are adjacent to a selected data item. This allows to extend the basis of information which is considered when determining applicable processing actions. For instance, when a mouse pointer is located at a center of a peak, the system may offer a merging operation between this peak and another peak (presently not selected) located at the left-hand side of the selected peak by a selection segment which is arranged on the left hand side of the selected peak. The system may further offer a merging between this peak and another peak (presently not selected) located at the right-hand side of the selected peak by another selection segment which is arranged on the right hand side of the selected peak.

The processing action display unit may be adapted for displaying the selection segments in a context-specific manner. Thus, there may be a logic link between the way the selection segments are displayed and the context in which the user operates. Therefore, the applicable processing actions are displayed not only in an arbitrary manner, but processing actions which relate to a specific context are displayed at a position which is indicative of this context.

The processing action determining unit may be further adapted for determining only, i.e. exclusively, a number of feasible processing actions which can be selected subsequently by the user for processing the selected data items and which have a spatial correlation with the displayed multidimensional set of data. In such an embodiment, other possible processing actions which do not fulfill this condition will not be displayed so as to perform an intelligent preselection for a user allowing the user to easily navigate through a system offering a huge number of functions.

In case that a function is presently not offered, a specific operation of the user interface may be defined, for instance pressing a specific mouse button, which may trigger a function that allows a user to see not only the feasible processing actions but all offered processing actions.

The processing action determining unit may be adapted for determining the number of processing actions which can be selected subsequently by the user from a prestored list (which may be stored in a database) of processing actions having a spatial correlation to a piece of a multidimensional set of data. Thus, the processing action determining unit may have access to a memory or database in which a complete list of functions supported or provided by the system are stored. The processing action determining unit may then apply one or more criteria on each of the prestored processing actions to determine for each individual processing action whether it might be applicable in the present case. It is also possible that the processing actions are grouped in the list so that criteria may be applied in a groupwise manner allowing to make the decision which groups of processing actions are clearly not applicable in a very fast manner with reasonable computational burden.

The processing action determining unit may be adapted for determining a number of processing actions which cannot be selected subsequently by the user for processing the selected data item and may be adapted to prevent the processing action display unit from displaying these processing actions on the selection area. In such an embodiment, the processing action determining unit may rule out clearly not applicable processing actions which allows a user to concentrate on applicable processing actions, reducing the number of available options to a reasonable number. This may make it much easier for a user to navigate through a complex system offering a lot of functionality.

The processing action display unit may be adapted for displaying a selection area being shaped as a segmented circle. A segmented circle may be a circle being divided into different segments, each of the segments having a spatial correlation to an assigned function. Alternatively, a segmented oval may be used, or a segmented polygon (such as a segmented triangle or a segmented square). However, any other geometric arrangement of the selection area is possible. It is also possible that the system specifically determines a shape of a selection area in accordance with a present context, further allowing to make the system more intuitive.

The processing action display unit may be adapted for displaying the selection segments tapering towards a central portion of the selection area. Thus, all selection segments may be connected to one another at a common point allowing a user to be used as some orientation or zero point. It is possible that this centre of the selection segments correlates or is identical with the present position of the pointer allowing a user to select anyone of the processing actions in a very fast way, i.e. with a short path (on the display area) between present position and selection position.

The processing action display unit may be adapted for marking (for instance visually), particularly for highlighting, a portion of the multidimensional set of data which includes the selected data item upon moving the pointer on one of the number of selection segments which represents a processing action related to the marked portion. Even with the intuitive display of the segments with a spatial correlation to the corresponding function, it may still be difficult for a user to unambiguously understand which selection segment is correlated with which function. When a user moves the pointer on a specific one of the segments, the corresponding portion of the multidimensional set of data may be highlighted so that the user gets a well-defined impression which operation is to be performed in the following, if the user would select the corresponding selection segment.

The processing action display unit may be adapted for displaying a plaintext or an alphanumerical explanation of a processing action upon moving the pointer on one of the number of selection segments which represents a processing action. Thus, upon selection of one of the selection segments, the system may automatically display a text which indicates a function to be carried out in case that the user would select the corresponding selection segment.

The processing action display unit may further be adapted for tracking the display of the selection area in real time upon moving the pointer to another data item of the displayed multidimensional set of data. In case that a user has selected a specific data item unintentionally and moves the pointer to another position, the system will automatically update the number of possible or feasible processing actions allowing the user to save time when operating the system. A motion of the mouse pointer will trigger the system to continuously update the offered actions, since such a motion will also change the data item which is presently selected.

The processing action display unit may be adapted for initiating displaying of the selection area upon detection that the pointer approaches the displayed multidimensional set of data up to less than a predefined threshold distance. A system may understand that a user having a limited precision or accuracy when operating the pointer might have the intention to highlight a specific portion of the multidimensional set of data when a distance between the pointer and a specific portion of the graph is less than a specific threshold value. Such a threshold value may be a typical value of resolution by which a user can operate the pointer. In such a way, the operation of the system may be made even more simple.

The selection segments may be displayable with a predefined spatial correlation on a display area between a processing action represented by a respective one of the selection segments and the displayed multidimensional set of data. Thus, the system may involve artificial intelligence allowing to arrange the selection segments at a suitable position of the display. For example, the selection segment (particularly a textual annotation) should not be displayed in a manner to overlie portions which are probably presently of interest by a user, allowing a user to continue analysis of the multidimensional set of data while allowing simultaneously to display the selection segments in an intuitive way.

The selection segments may be displayable with a spatial correlation between a function provided by a processing action and the entire displayed multidimensional set of data. Thus, not only a specific data item may be correlated spatially with the selection segments, but the entire multidimensional set of data.

The processing actions may comprise a user-defined baseline manipulation for the multidimensional set of data, a user-defined peak manipulation for the multidimensional set of data, a merging of peaks of the multidimensional set of data, an integration over at least a part of the multidimensional set of data, an estimation of a separation between adjacent portions (such as adjacent peaks of a measurement spectrum) of the multidimensional set of data, a peak detection in the multidimensional set of data, etc. Thus, the system according to an exemplary embodiment may be particularly appropriate for use with a graph analysis which is formed by a baseline and one or multiple peaks. In a technically meaningful manner, a human operator may then modify, manipulate, alter or interact with the graph supported by a computer system in a fast and reliable manner.

The pointer may be a cursor. A cursor may denote a part of a computer system that is movable back and forth to indicate a position. A cursor may be a moving icon or other representation of the position of the pointing device or an indicator, for instance a blinking line or bar, indicating where the next insertion or other edit will take place.

The pointer may be a mouse pointer. A mouse pointer may be denoted as a graphical image (for instance an arrow head) appearing on a screen and representing a current location of the computer mouse. In other words, a mouse pointer may denote an indicator on the screen responding to the movement of a computer mouse.

The device may comprise an input unit adapted for being operable by the user for moving the pointer on the display surface. Such an input unit may be a computer mouse, a trackball, a keypad, a joystick, etc. The input unit may comprise buttons or control panels for moving the pointer on the screen and may comprise one or more buttons for performing selection operations, for instance for selecting one of the segments.

The device may comprise a display unit for visually displaying the multidimensional set of data and the selection area (such as an integration rudder or another electronically displayed selection icon). Such a display unit may be a cathode ray tube, a liquid crystal display, a plasma device, or the like allowing to physically display an image including the mentioned components.

The device may further comprise an attractor display unit adapted for displaying an attractor on the displayed multidimensional set of data when the pointer is located apart from the displayed multidimensional set of data, wherein the attractor may be located at a vertical projection of a present location of the pointer onto the multidimensional set of data. Such an attractor may be an indicator on a display which shows a projection of a current pointer position onto a graph or the like. Using an attractor, it is more easy for a user to navigate on a complex multidimensional space representing data such as measurement data. Such an attractor function may be equipped with a snap in function which may allow a user to move a pointer along the set of data in a simple way. For instance, moving a computer mouse along a planar area on a table may force the displayed mouse pointer to always follow a graph in accordance with the planar motion. This may simplify operation of the device, since tracking a graph may become easier.

The device may comprise a processing action execution unit adapted for executing an analysis action for at least a part of the displayed multidimensional set of data upon selection of one of the selection segments by the pointer. Thus, upon selection of the corresponding processing action, for instance by pressing a corresponding selection button on the input unit, the system may start executing the applicable and selected function.

The system may be adapted as a graphical user interface (GUI) which may be denoted as the user interface which allows people to interact with electronic devices such as computers or handheld devices. A GUI offers graphical icons and visual indicators as opposed to purely text based interfaces, typed command labels or text navigation to fully represent the information and actions available to a user. The actions may then be performed through direct manipulation of the graphical elements.

The device may be adapted for processing a displayed two-dimensional set of data, particularly may be adapted for processing a measurement curve. Such a measurement curve may be provided by a measurement apparatus, for instance a life science apparatus or any other technical apparatus. Evaluating such measurement data may be conventionally a challenge and may be significantly simplified by the intuitive user interface according to an exemplary embodiment.

The multidimensional set of data may comprise liquid chromatography data. Such liquid chromatography data may be obtained by carrying out a sample separation procedure using a chromatographic column, wherein individual peaks may be detected optically and/or by a mass spectroscopy device. Exemplary embodiments may be applied to multidimensional sets of data of a liquid chromatography system, a gas chromatography system, particularly of a HPLC (high performance liquid chromatography). The system may offer specific functions related to the field of liquid chromatography data evaluation. For example, models for baselines of liquid chromatography data may be included in a database of the system as well as models of peaks, possible positions of peaks, possible line widths of peaks, etc.

The multidimensional set of data may comprise coupled liquid chromatography and mass spectroscopy data. Thus, the system may allow to offer the individual processing functions in accordance with the requirements of analyzing a coupled liquid chromatography and mass spectroscopy data set.

The measurement of data may comprise at least one physical, chemical, and/or biological parameter of an analyte under examination. A physical parameter may be a pressure or temperature value. A chemical parameter may be a concentration, and a biological parameter may be a biological activity, for instance.

The measurement data may be provided by a measurement device which can be a sensor device, a test device for testing a device under test or a substance, a device for chemical, biological and/or pharmaceutical analysis, a fluid separation system adapted for separating components of a fluid, a capillary electrophoresis device, a liquid chromatography device, a gas chromatography device, an electronic measurement device, and a mass spectroscopy device. Particularly, the measurement data may be the result of an experiment or an analysis performed with a life science apparatus. However, other applications are possible.

The multidimensional set of data may be a graph. A graph may be denoted as a two- or three-dimensional space which correlates different parameters corresponding to different axes of a coordinate system, for instance two parameters plotted along an abscissa and an ordinate of a two-dimensional Cartesian coordinate system. Such a graph may be continuous, discontinuous, or a set of spaced points. Thus, the graph may be a continuous measurement curve which can be differentiated at each position. However, also discontinuous graphs which cannot be differentiated at at least one position can be evaluated according to exemplary embodiments. It is also possible that the graph is simply formed by a number of isolated and spaced points.

The plurality of data items may be sections of the graph. Thus, a user may select one of a section of a graph, for instance a feature such as a peak, and may then evaluate this section specifically.

The multidimensional set of data may be a data set characterizing a dependency between different parameters. For example, one axis may be the time and the other axis may be the intensity of a signal. For instance, such a two-dimensional graph may be obtained by a liquid chromatography analysis.

Exemplary embodiments may serve for adjusting and modifying automatically obtained results. Exemplary embodiments may be applied additionally for evaluating measurement curves, particularly for a precise estimation of a baseline of a measurement curve, for instance from liquid chromatography. This may allow a user to derive in a quick and precise manner, a position of a peak on a time axis, allowing to derive which substance is correlated to the peak. An area under such a peak may allow to derive the concentration of the corresponding fraction of a multicomponent sample. Exemplary embodiments may provide some peak finder function allowing to calculate an area of a peak by integration allowing a user to evaluate a complex spectrum in a short time and in a simple and intuitive way. Exemplary embodiments allow for a visual feedback and an intelligent pointer function, since a computer program may evaluate which selection of functions or actions may be technically reasonable in view of the current position of the pointer relative to the set of data. When available and feasible processing actions are displayed, these may be displayed with a concrete relation between the position of the segment or an orientation of the segment and the evaluated object (for instance a graph). This allows for a context related display of information.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 illustrates a system of processing a displayed multidimensional set of data formed by a plurality of data items according to an exemplary embodiment.

Fig. 2 shows a chromatographic graph to be analyzed according to an exemplary embodiment.

Fig. 3 illustrates a peak integration tool according to an exemplary embodiment.

Fig. 4 shows an operation mode allowing to overwrite a baseline according to an exemplary embodiment.

Fig. 5 illustrates a rider peak integration mode according to an exemplary embodiment.

Fig. 6 shows a move baseline operation mode according to an exemplary embodiment.

Fig. 7 illustrates a move baseline tool according to an exemplary embodiment.

Fig. 8 illustrates a split peaks tool according to an exemplary embodiment.

Fig. 9 illustrates a move drop line tool according to an exemplary embodiment.

Fig. 10 illustrates a merge peaks tool according to an exemplary embodiment.

Fig. 11 illustrates a delete baseline tool according to an exemplary embodiment.

Fig. 12 illustrates an interaction with baseline points according to an exemplary embodiment.

Fig. 13 illustrates a move left isolated peak tool according to an exemplary embodiment.

Fig. 14 illustrates a move right isolated peak tool according to an exemplary embodiment.

Fig. 15 illustrates a move left baseline segment tool according to an exemplary embodiment.

Fig. 16 illustrates a move right baseline segment tool according to an exemplary embodiment.

Fig. 17 illustrates a move common baseline point tool according to an exemplary embodiment.

Fig. 18 illustrates an integration rudder according to an exemplary embodiment.

Fig. 19 illustrates different types of baseline points according to an exemplary embodiment.

Fig. 20 illustrates a common baseline point according to an exemplary embodiment.

Fig. 21 illustrates a move baseline point tool according to an exemplary embodiment.

Fig. 22 illustrates a move baseline point tool according to an exemplary embodiment.

Fig. 23 illustrates a move baseline point tool according to an exemplary embodiment.

Fig. 24 illustrates a move isolated baseline point tool according to an exemplary embodiment.

Fig. 25 illustrates a move isolated baseline point tool according to an exemplary embodiment.

Fig. 26 illustrates a move common baseline point tool according to an exemplary embodiment.

Fig. 27 illustrates a new connected baseline tool according to an exemplary embodiment.

Fig. 28 illustrates a liquid chromatography system according to an exemplary embodiment.

The illustration in the drawing is schematically.

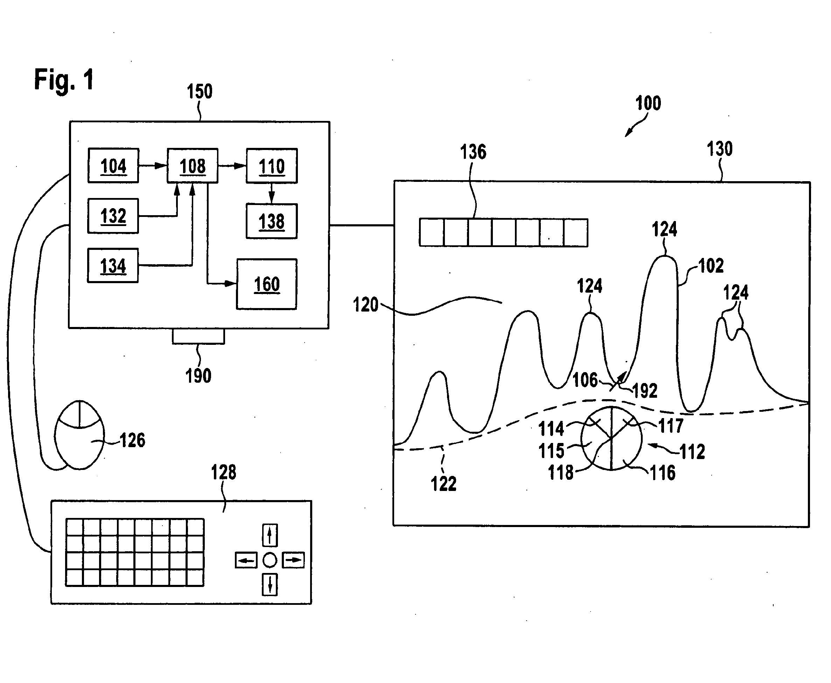

**Fig. 1** illustrates a data analysis system 100 according to an exemplary embodiment.

The device 100 is adapted for processing a displayed two-dimensional graph 102 (a liquid chromatography graph in the present scenario) which is formed by and which may be virtually divided in a plurality of graph sections or graph points as data items.

The system 100 comprises a liquid crystal display unit 130, a processor 150 (such as a microprocessor or a central processing unit, CPU) and input units 126, 128 comprising a computer mouse 126 and a keypad 128 both coupled for data communication with the processor 150. The processor 150 is coupled for data communication with the display 130. Via the display 130 and the input units 126, 128 it is possible for a user to control a mouse pointer 106 by operating the computer mouse 126 or the keypad 128.

The processor 150 is coupled to a data interface 190 such as a USB interface via which the data 102 may be supplied to the system 100.

The processor 150 comprises a pointer selection determining unit 104 adapted for determining a selected one of the data items which is presently selected by the mouse pointer 106 operable by the user. Furthermore, the processor 150 comprises a processing action determining unit 108 for determining a number of applicable processing actions which are applicable for the selected data item and which can be selected by the user for processing the selected data item. In the present scenario, the mouse pointer 106 has been moved by the user onto the graph 102. Thus, the pointer selection determining unit 104 will recognize that the user has moved the mouse pointer 106 to the local minimum 192 of the graph 102 as shown in Fig. 1. The processing action determining unit 108 determines feasible processing actions which are likely or possible to be selected subsequently by the user after having moved to the data item corresponding to the position 192 of the mouse pointer 106. Four different possible processing actions are evaluated in the present scenario.

A processing action display unit 110 of the processor 150 is adapted for displaying a selection area 112 as a segmented circle having a number of selection segments 114 to 117 as circular segments, each selectable by the mouse pointer 106 (by moving to the corresponding selection segment 114 to 117 and clicking with a mouse button of the computer mouse 126 or with a selection button of the keypad 128). Upon selection, the respective processing action can be activated.

Each of the four selection segments 114 to 117 (of course, the number of selection elements may be larger or smaller than four) represents one of the four determined applicable processing actions, wherein the selection segments 114 to 117 are displayed with a spatial correlation between a respective action represented by a respective one of the selection segments 114 to 117 and one of the data items corresponding to the respective processing action. In the present embodiment, a segment 114 is arranged at the upper left side, a processing action 115 is arranged at the lower left side, a processing section 116 is arranged at the lower right side, and a processing section segment 117 is located at a right upper side of the selection area 112. By selecting the segment 115, a baseline operation on the left-hand side of the graph 102 can be carried out manipulating a baseline 122. By the segment 116, a baseline manipulation on the right-hand side of the graph 102 can be carried out. By selecting the segment 114, a peak 124 on the left-hand side of the present position of the mouse pointer 106 can be altered, modified, or manipulated, and by the segment 117, a peak 124 on the right-hand side of the present mouse pointer position 106 can be altered, modified, or manipulated. The "peaks" 124 are arranged on upper portions of the graph 102, and so the corresponding segments 114, 117 are intuitively arranged at the upper portion of the selection area 112. In contrast to this, the "baseline" operations 115, 116 are arranged on a lower portion of the selection area 112, corresponding to a lower position of the baseline 122 as compared to maxima 124 of the graph 102. Thus, there is a spatial correlation between a position of a corresponding one of the segments 114 to 117 on the selection area 112 and the corresponding action to be carried out. Thus, the selection segments 114 to 117 are displayed in a context specific manner.

For generating the presently four segments 114 to 117, the processing action determining unit 108 searches for possible actions in a database 160. In this database 160, a number of functions supported by the computer system 100 are stored. The processing action determining unit 108 determines which of the present functions are applicable in the present scenario in view of the present position of the mouse pointer 106. Only these applicable or feasible actions are displayed by the processing action display unit 110 on the display 130.

The selection segments 114 to 117 are arranged in a tapering manner around a center 118 of the selection circle 112. This allows for an intuitive display of the various possibilities for the user.

When the mouse pointer 106 is moved for instance to the segment 114, the peak 124 on the left-hand side of the pointer 106 is highlighted to show a user that, by clicking on the segment 114, this peak 124 can be manipulated. Furthermore, this highlighting can be accompanied by the display of a corresponding text below the selection area 112 indicating the function assigned to the selected selection segment 114.

When the user moves the pointer 106 along the graph 102 on the display 130, the processing action display unit 110 will track or continuously update the display of the selection area 112 in real time. In other words, the offered actions and correspondingly the displayed segments 114 to 117 will be changed regarding number and/or content and/or spatial arrangement upon moving with a pointer 106 along the curve 102.

An attractor display unit 132 is adapted for displaying, if necessary, an attractor icon on the displayed multidimensional set of data 102 when the pointer 106 is located apart from the displayed multidimensional set of data 102. The attractor is located at a position of a vertical projection of a present location of the pointer 106 on the multidimensional set of data 102. Although not shown in the figures, when the mouse pointer 106 is for instance arranged below the graph 102, a projection of the current pointer 106 position will be projected on the graph 102 for simplifying, for a user, to select a portion of the graph 102. It is also possible that an adjacent baseline point serves as an attractor. In such a scenario, the attractor is not necessarily positioned on the signal. It is possible that the attractors are only displayed/visible when an assigned action is executed (for instance, a user has already started to shift a baseline point).

Moreover, the processor 150 comprises a toolbar display unit 134 for displaying a toolbar 136 on display screen 120 apart or spaced from the displayed multidimensional set of data 102. The toolbar 136 includes a number of processing actions which do not have a spatial correlation with the present position of the mouse pointer 106 on the displayed graph 102 (for instance a zoom function). However, exemplary embodiments may allow that the use of a toolbar can be completely omitted.

Furthermore, the processor 150 comprises a processing action execution unit 138 adapted for executing a processing action for at least a part of the displayed multidimensional set of data 102 upon selection of one of the selection segments 114 to 117 by one of the input units 126, 128. Thus, when the user moves on one of the selection segments 114 to 117 and presses the button of the mouse 126 or a button of a navigation portion of the keypad 128, the corresponding function is carried out.

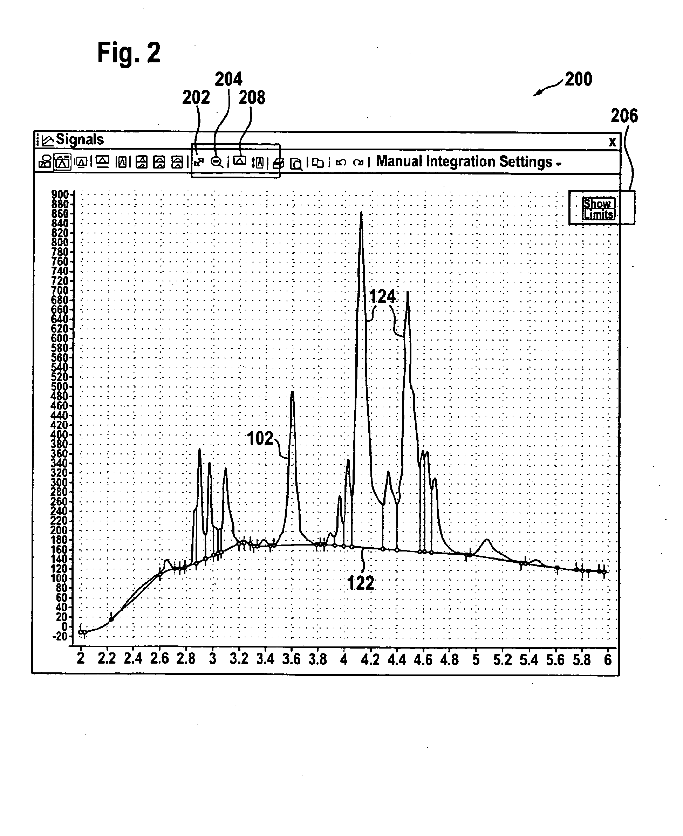

In the following, referring to Fig. 2 to Fig. 27, further details of a graphical user interface according to an exemplary embodiment will be explained.

**Fig. 2** illustrates a screenshot 200 showing a graph 102 indicative of a result of a chromatographic experiment. The graph 102 has a number of features, including a number of peaks 124. A baseline 122 is shown as well resulting from a theoretical analysis of the graph 102 and being indicative of an unspecific offset or underground signal which has to be subtracted from the graph 102 to obtain only the specific and desired peaks 124 indicative of components of a fluidic sample separated by the chromatographic experiment.

Fig. 2 shows an integrated signal 102. There are actually several curves overlaid, namely a raw signal, a smooth signal with the peaks 124 and the integration baseline 122.

Particularly, the following mouse click functions are available: Right click and drag draws a rectangle. The signal may be zoomed into the scaling defined by the rectangle. After a right double click operation, an unzoom one zoom action back function will be performed.

A first toolbar function 202 autoscales to full x- and y-axis values. A second toolbar function 204 unzooms one zoom action back. A third toolbar tool 206 switches the start/end integration markers on and off. The markers can be adjusted with a mouse to define where the integration should start and end. With a fourth toolbar tool 208, two buttons are provided with which the x- as well as the y-axis can be logged to the current scale. When selecting a different signal, the scaling of the axis will be kept, and x and y axis can be logged independently of each other.

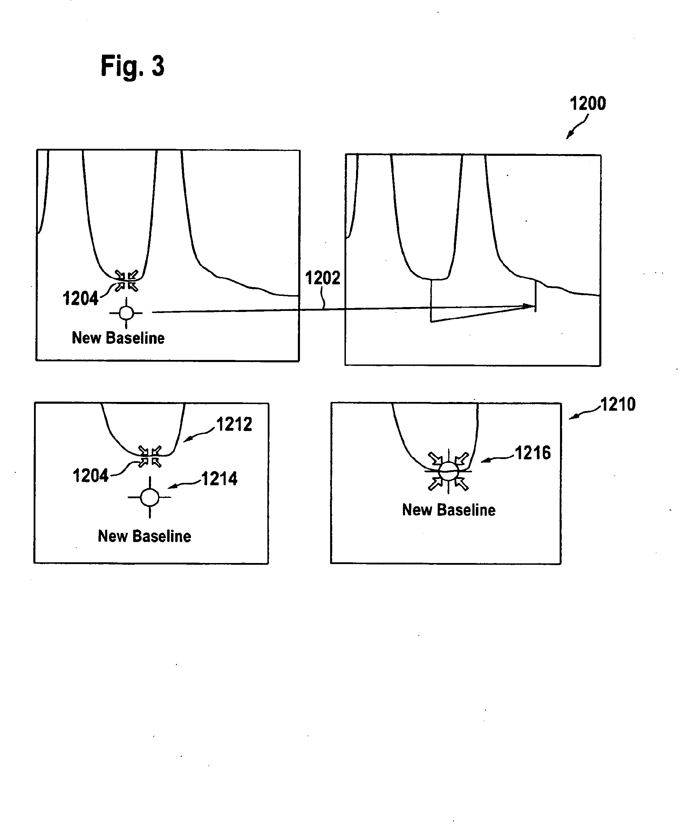

A tool to integrate a new peak will be explained in the following referring to **Fig. 3****.**

The new baseline tool is automatically activated when the mouse cursor is moved below the signal in an area where no peak is integrated. In this case the cursor will change to a crosshair symbol 1204. By clicking with the left mouse button and tracking the appearing baseline to a new position, a new peak can be integrated. The result of such a click and drag operation 1202 can be taken from a first diagram 1200 of Fig. 3.

The new baseline segment (respectively peak) can be freely constructed at any position within areas that do not contain any peaks. Often it is however required or desired that the baseline segment starts and/or ends directly at the signal. To do this, it is possible to use a signal attractor function, as can be taken from a diagram 1210 in Fig. 3.

The signal attractor is indicated by four small arrows that are shown right above a current cursor position at the signal. When the cursor 1214 approaches the signal attractor 1212, it will automatically snap to the signal attractor 1212. Fig. 3 shows how the free cursor 1214 is snapped as this is also visually indicated. The snapping mode is denoted with reference numeral 1216.

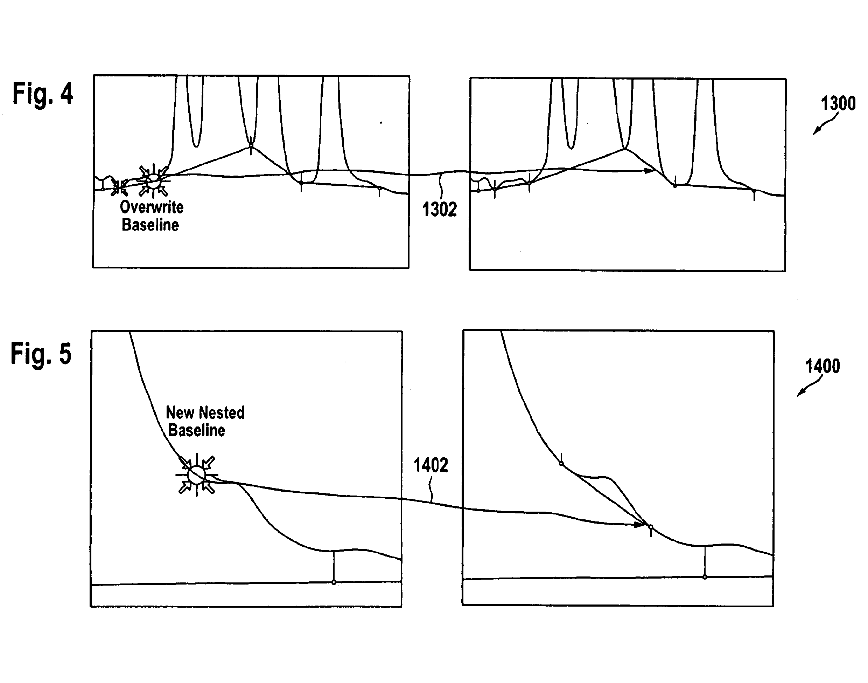

It is only possible to construct new baseline segments in areas that do not contain any peaks. Also dragging is limited to these regions, that is to say it is not possible to drag a new baseline segment over an already existing peak. Sometimes, it can be useful to overwrite existing results. Such an override mode can be activated by pressing a control key. In an overwrite mode, new baselines can be constructed at any position and dragging is not limited. Overlapping existing baselines will be deleted as can be seen in a diagram 1300 shown in **Fig. 4****.** By pressing control and then clicking and dragging, an operation 1302 as indicated schematically in Fig. 4 is carried out.

In the following, a tool to integrate a new rider peak will be explained.

The new baseline tool is also available to integrate shoulder or rider peaks. The shoulder or rider peaks are always associated with the so-called nested baseline segments. These are segments that are defined within some parent peak. Therefore, in this case, this tool may be called "new nested baseline" tool. The "new nested baseline" tool works the same way as the "new baseline" tool, but the dragging range is limited to the region of the associated peak. This tool is activated when the mouse cursor is within a peak in a range where no other nested segments are defined. The dragging range is limited by the parent peak and by already existing new baseline segments. The signal attractor functionality is identical with the "new baseline" tool.

By clicking with the left mouse button and dragging the appearing baseline to a new position, a new nested (rider or shoulder peak) can be integrated.

Such a click and drag operation 1402 is shown in a diagram 1400 of **Fig. 5****.**

With a right click on the nested baseline segment, the context menu will allow to change the baseline type from linear to exponential and vice versa. The last selected baseline mode will always be used to construct a new baseline for a rider/shoulder peak.

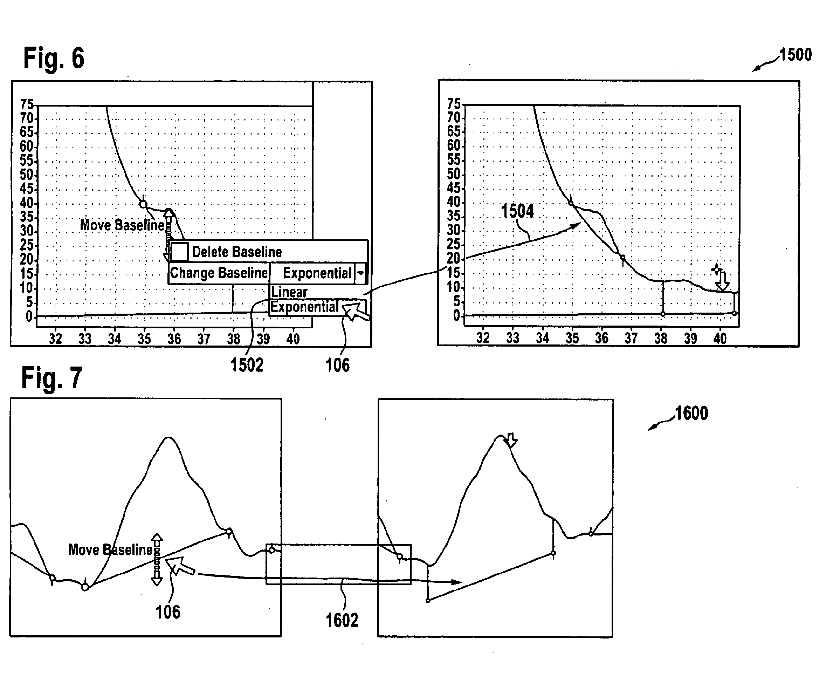

**Fig. 6** shows a diagram 1500 illustrating such an operation. By adjusting a linear or exponential function by clicking with the pointer 106 on a corresponding button 1502, the corresponding baseline shape will be selected resulting in a change 1504 of the displayed data.

**Fig. 7** shows a diagram 1600 illustrating a move baseline tool.

When the mouse cursor is moved close to a peak baseline or baseline segment, the "move baseline" tool is activated. By click and drag, the baseline can be moved up and down to a new position. Such a click and drag operation 1602 is indicated schematically in the diagram 1600.

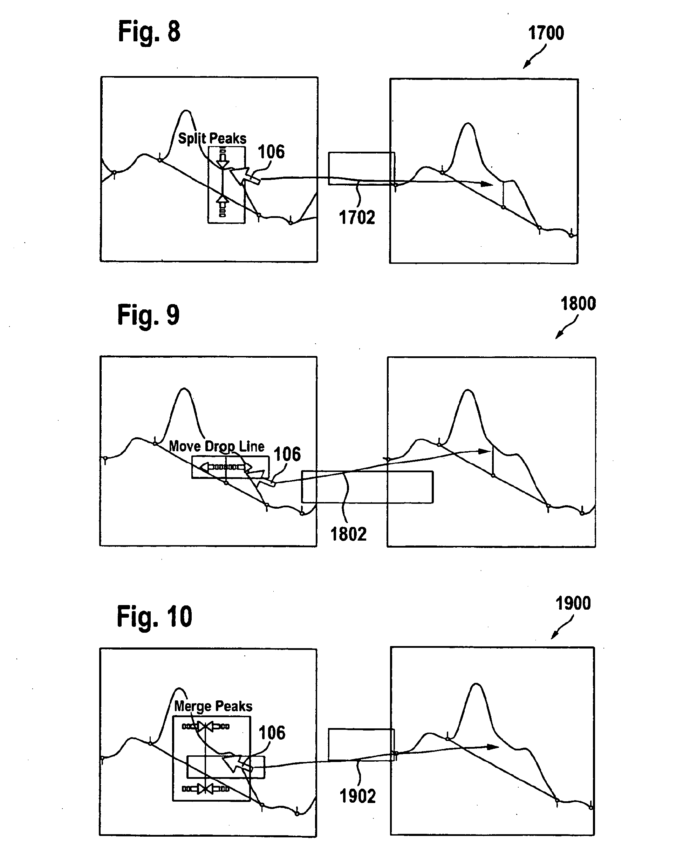

A split peaks tool will be explained on the basis of **Fig. 8** which illustrates a corresponding diagram 1700.

If the mouse cursor 106 is moved above the signal of an integrated peak, the "split peak" tool is activated. Left click will split the peak at that position with a drop line. The effect of a corresponding click 1702 is shown in Fig. 8.

A move drop line tool will be explained on the basis of **Fig. 9** which illustrates a corresponding diagram 1800.

If the mouse cursor is moved close to a drop line, the "Move Drop Line" tool is activated. The drop line can be moved to a new position by click and drag to the left or the right. The effect of a corresponding click and drag 1802 is shown in Fig. 9.

**Fig. 10** shows a diagram 1900 which illustrates a merge peaks tool.

By performing a clicking operation as indicated by reference numeral 1902 such a merging is initiated.

If the mouse cursor 106 is moved to a position above a drop line, the "merge peaks" tool is activated. With a left click, the two peaks separated by a drop line will be merged together.

Alternatively, the merge peaks functions of the context menu for the drop line can be used (right click on the drop line).

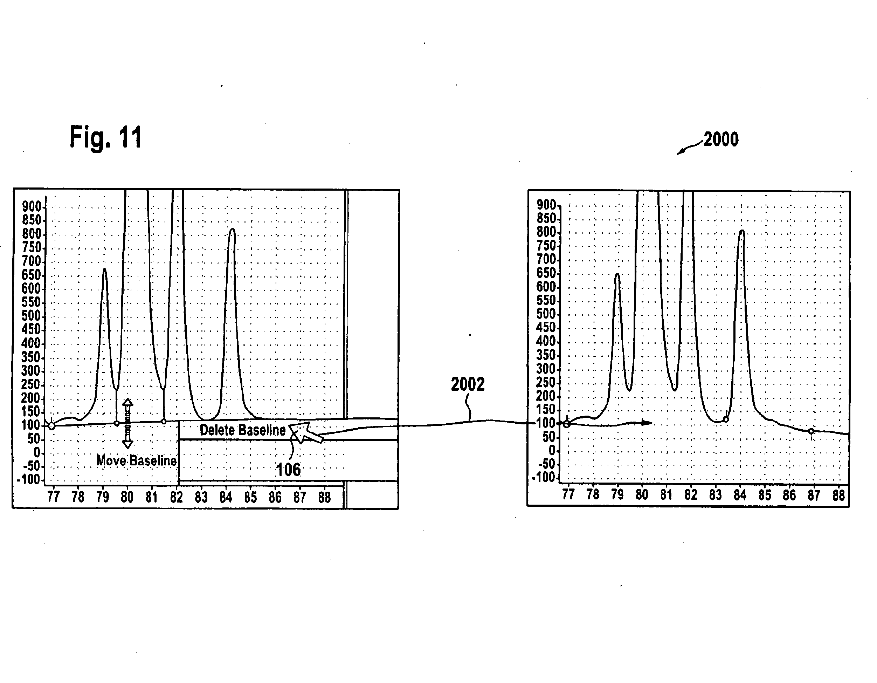

**Fig. 11** shows diagrams 2000 indicating a delete baseline tool. Performing a right click and select function indicated schematically by reference numeral 2002 with the computer mouse pointer 106 will activate the delete baseline function.

Peak baseline or baseline segments can be deleted by a right click onto the baseline. The "delete baseline" function in the context menu will delete the selected baseline or baseline segment.

In the following, interaction with baseline points will be explained.

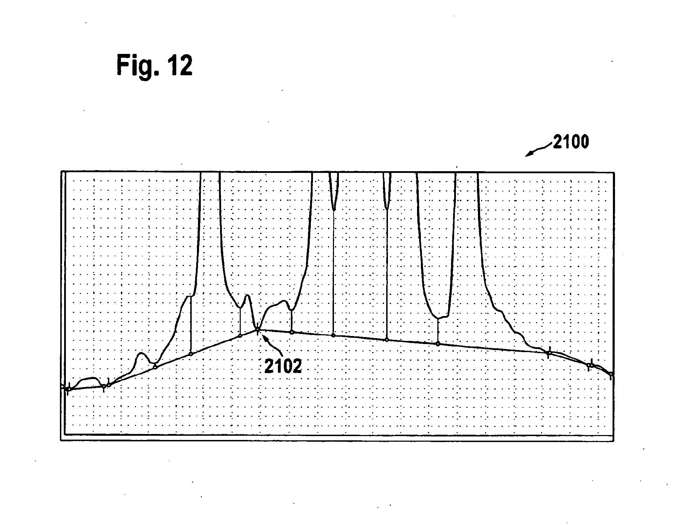

The manual integration allows modification of baseline points in various ways. To clarify the possibilities, it is referred to the particular example of **Fig. 12** showing a graph 2100. The example shows the result of an automatic integration. As can be seen, there are several baseline segments. Some of them are associated with a single peak, others contain multiple peaks. One baseline point is indicated schematically with reference numeral 2102.

The annotated baseline point 2102 is part of two individual peaks, but it is also part of two baseline segments. Therefore, there exist multiple options of what to do with the single baseline point 2102.

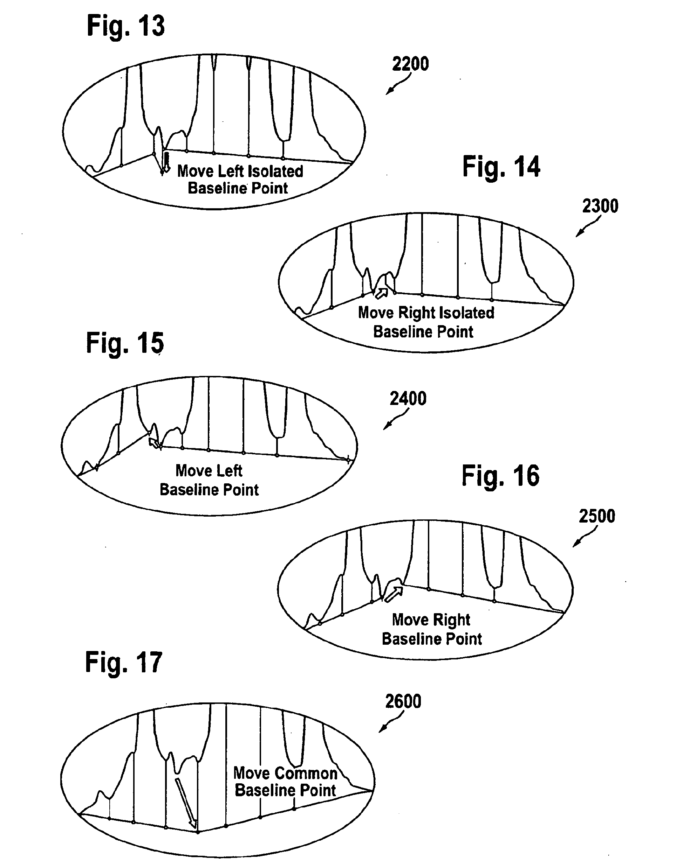

**Fig.13** illustrates a move left isolated peak operation 2200. In this mode, the baseline point 2102 is moved so that only the peak immediately left of the baseline point is modified. Everything else is not modified by this action.

**Fig. 14** shows a move right isolated peak operation mode 2300. In this mode, the baseline point 2102 is moved so that only the peak immediately right of the baseline point is modified. Everything else is not modified by this action.

**Fig. 15** shows a move left baseline segment mode 2400. In this mode, the baseline point 2102 is moved so that the whole left baseline segment including all its associated peaks gets modified. The right baseline segment is not modified by this action.

**Fig. 16** shows a move right baseline segment mode 2500. In this mode, the baseline point is moved so that the whole right baseline segment including all its associated peaks gets modified. The left baseline segment is not modified by this action.

**Fig. 17** shows a move common baseline point operation mode 2600. In this mode, the baseline point 2102 is moved so that both baseline segments and all of their associated peaks get modified.

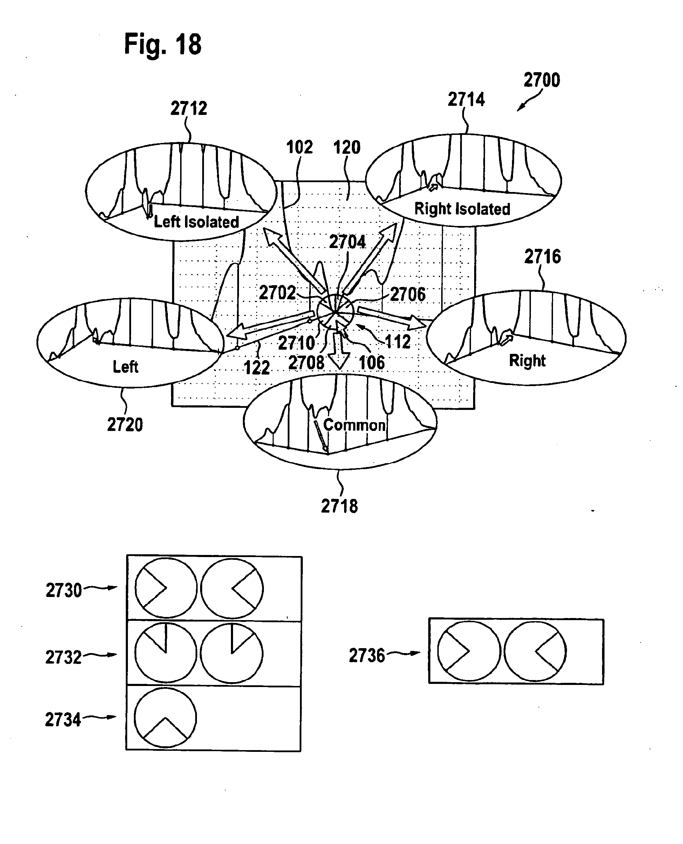

In the following, referring to **Fig.18****,** an integration rudder 2700 according to an exemplary embodiment will be explained.

A solution to the above-mentioned problem is provided by the integration rudder 2700. The integration rudder 2700 appears automatically when the mouse 106 is moved sufficiently close to a baseline start/end or the connection point of a baseline drop with a baseline segment. The integration rudder 2700 will be followed by the display of the circular display area 112 having a plurality of segments 2702, 2704, 2706, 2708, 2710. These segments 2702, 2704, 2706, 2708, 2710 are colored. Each of the segments 2702, 2704, 2706, 2708, 2710 is associated with a specific action that is currently possible for the active baseline point. For the above example, the integration rudder 2700 will have an appearance as shown in Fig. 18.

In the embodiment of Fig. 18, the selection area comprises a first segment 2702, a second segment 2704, a third segment 2706, a fourth segment 2708 and a fifth segment 2710. The first segment 2702 is assigned to a first action 2712. The second segment 2704 is assigned to a second function 2714. The third segment 2706 is assigned to a third function 2716. The fourth segment 2708 is assigned to a fourth function 2718. The fifth segment 2710 is assigned to a fifth function 2720.

In the example of Fig. 18, the integration rudder 2700 is formed of the five segments 2702, 2704, 2706, 2708, 2710. Each of the five possible options 2712, 2714, 2716, 2718, 2720 has an assigned segment 2702, 2704, 2706, 2708, 2710. The respective color of each of the segments 2702, 2704, 2706, 2708, 2710 is linked with the associated action 2712, 2714, 2716, 2718, 2720. Currently, there are four different base types of action/tools that can be offered by the integration rudder 2700.

By a move baseline point integration tool 2730, the whole baseline segment is modified and all its associated peaks. By a move isolated baseline point integration tool 2732, the isolated peak next to the baseline point is modified only. With a move common baseline point integration tool 2734, both (left and right) baseline segments are modified and all of their associated peaks are modified as well.

A new connected baseline peak 2736 allows the creation of a new baseline segment that starts directly at the baseline point.

To select a certain tool, it is possible to move the mouse 106 into the respective colored segment 2702, 2704, 2706, 2708, 2710, left click and drag the now highlighted (bold) baseline to the new position. In addition to the highlighted baseline, also the affected peaks may be marked, by filling them with a for instance light blue/grey color. So it is possible to already see what would be affected before really performing the modification.

Depending on the type of baseline point (for instance end point of a baseline segment, drop point of a baseline segment, etc.), the integration tools offered with an integration rudder 2700 may vary. The system may automatically offer the tools which are appropriate for use for the selected baseline point.

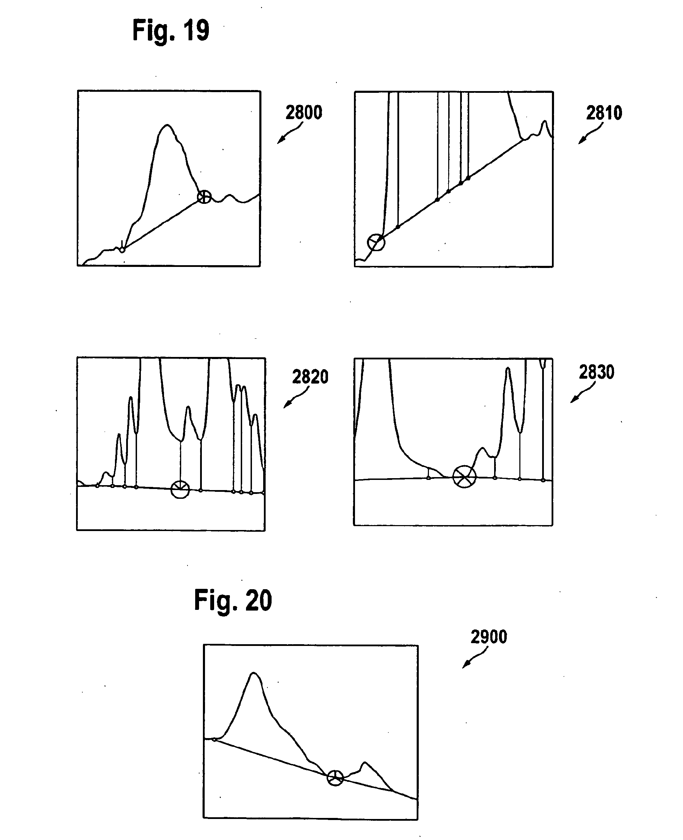

**Fig. 19** shows images showing different types of baseline points.

A first image 2800 relates to a peak baseline start/end point. A second image 2810 relates to a baseline segment start/end point. A third image 2820 relates to a drop point in a baseline segment. A fourth image 2830 relates to a common baseline point (between two baseline segments).

**Fig. 20** shows an image 2900 showing a common baseline point (between two peak baselines).

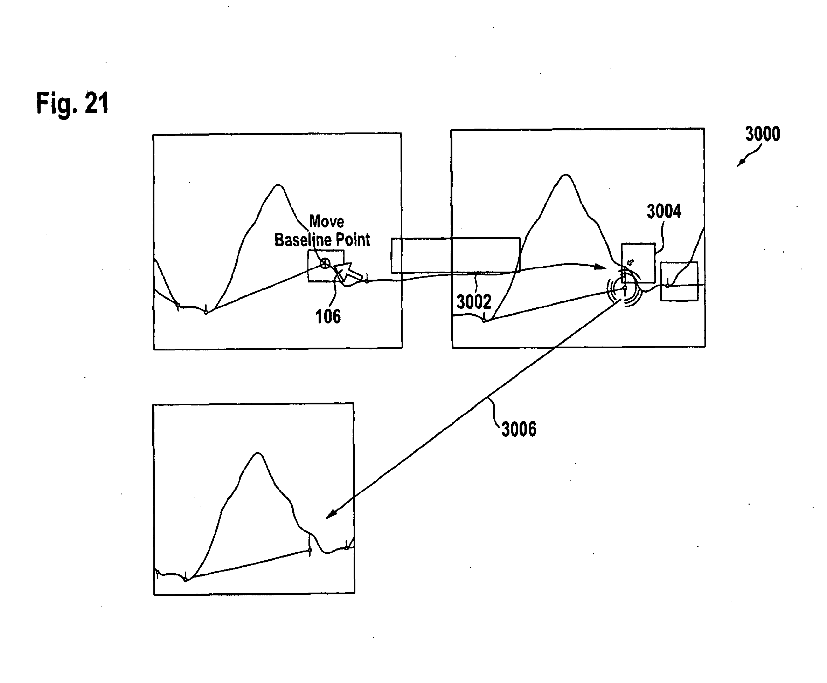

Next, a move baseline point (peak baseline) tool will be explained referring to **Fig. 21****.**

If the mouse cursor 106 is moved close to a peak baseline start or end, a correspondingly colored (for instance blue) rudder appears. This allows moving the respective start or end of a peak baseline to a new position with click and drag. Such an operation and its effects are indicated by a reference numeral 3002 shown in a diagram 3000 of Fig. 21. The baseline point can be freely placed at any position. The system will automatically snap the baseline point, indicated by reference numeral 3004 to a signal or to the next peak baseline if it is dragged to the marked snapping position. This can be indicated by four (for instance grey) arrows (attractor). A result 3006 of such an operation is shown in Fig. 21 as well.

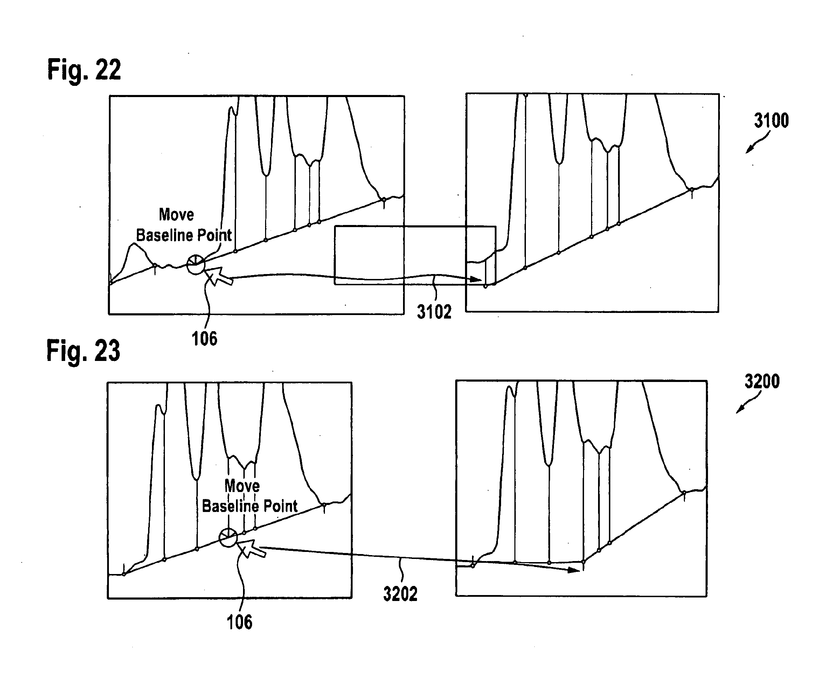

**Fig. 22** illustrates a tool related to the movement of the baseline point (baseline segment).

If the mouse cursor 106 is moved close to a baseline segment start or end, a rudder with a correspondingly shaped (for instance blue and yellow) segment appears. The tool works as described above at the peak baseline, but will move the whole baseline segment, if the, for instance, blue segment is selected.

Upon clicking on a, for instance, blue segment and dragging, the effect indicated by reference numeral 3102 of the diagram 3100 of Fig. 22 will result.

The same tool is available for a drop point within a baseline segment. In this case, the segment will be split into two parts when this point is moved to a new position. **Fig. 23** shows a diagram 3200 obtained upon clicking and dragging, compare reference numeral 3202.

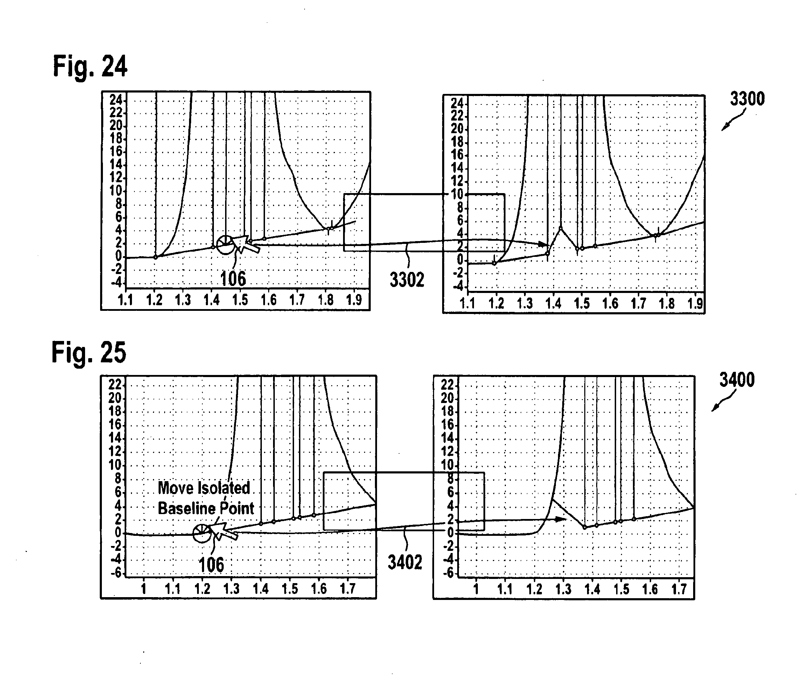

A move isolated baseline point tool will be explained referring to Fig. 24 showing a corresponding diagram 3300. If the mouse cursor 106 is moved close to a baseline segment start or end, a rudder with a correspondingly colored (for instance blue and yellow) segment appears. If the, for instance, yellow segment is selected, only the baseline of the peak left and right of the rudder will be moved, as indicated by reference numeral 3302.

**Fig. 25** shows a diagram 3400 showing a move isolated baseline point operation. Upon clicking on a, for instance, yellow segment and dragging, as indicated by reference numeral 3402, a corresponding operation will be executed. If this start or end of the baseline is selected and moved using this tool, the peak baseline of the selected peak is moved, not the whole baseline segment.

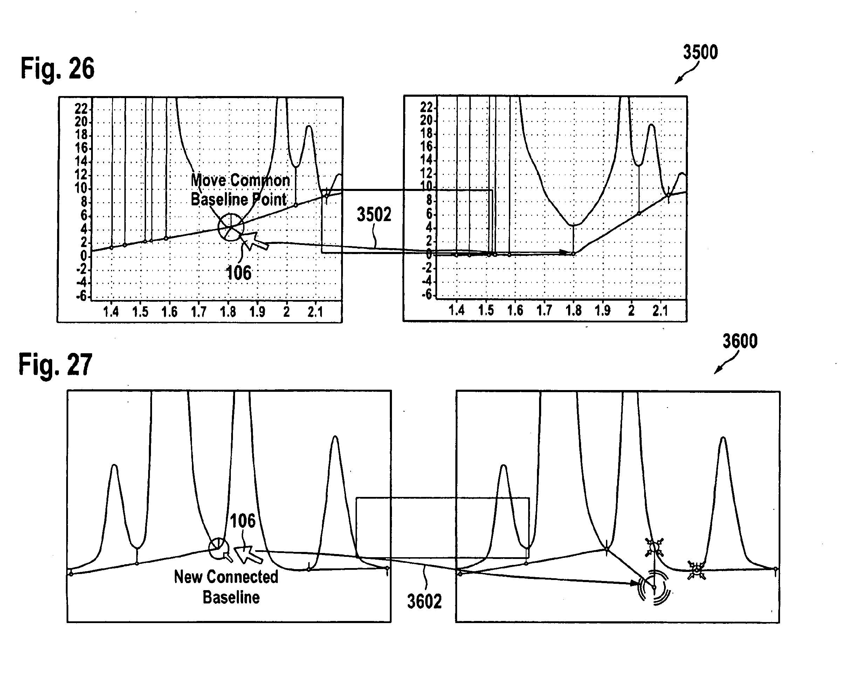

In the following, a move common baseline point tool will be explained referring to a diagram 3500 shown in **Fig. 26****.**

If the mouse cursor 106 is moved close to the connection point of two peak baselines or two baseline segments, a corresponding rudder with a correspondingly colored segment (yellow and red) appears. If the, for instance, red segment is selected, both baseline segments (or peak baselines) are moved at the same time while staying connected. The effect of a click right segment and dragging operation is indicated by reference numeral 3502.

Referring to **Fig. 27** showing a diagram 3600, a new connected baseline tool according to another exemplary embodiment will be explained. The new connected baseline tool is active for start and end points of baseline segments and peak baselines, but only if there is a gap between the active baseline point and the next baseline segment. If the tool is available it is represented as an additional, for instance, grey segment and the integration rudder. If the grey segment is selected, a new baseline segment is created that directly starts at the respective baseline point. The end of the new baseline segment can be freely positioned. The example shown in Fig. 27 shows the new connected baseline tool for a baseline segment. Upon performing a click grey segment and dragging operation, the function shown in Fig. 27 will be executed. This is indicated by reference numeral 3602.

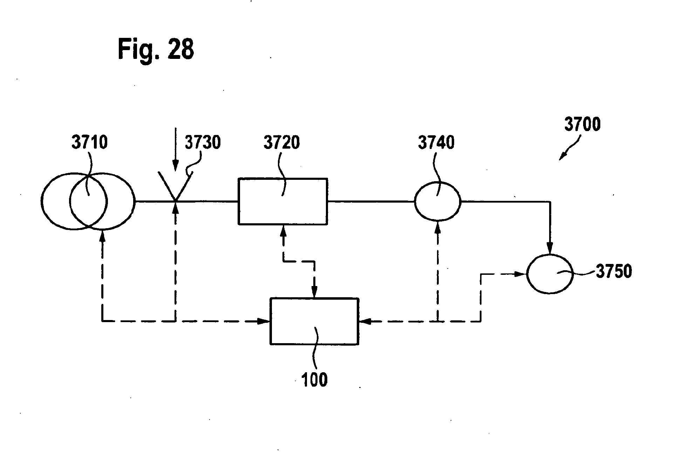

**Fig. 28** depicts a general schematic of a liquid separation system 3700. A pump 3710 - as a mobile phase drive - drives a mobile phase through a separating device 3720 (such as a chromatographic column) comprising a stationary phase. A sampling unit 3730 can be provided between the pump 3710 and the separating device 3720 in order to introduce a sample fluid to the mobile phase. The stationary phase of the separating device 3720 is adapted for separating compounds of the sample liquid. A detector 3740 is provided for detecting separated compounds of the sample fluid. A fractionating unit 3750 can be provided for outputting separated compounds of sample fluid.

A data processing unit 100, which can be a PC or workstation, might be coupled (as indicated by the dotted arrows) to one or more of the devices in the liquid separation system 3700 in order to receive information and/or control operation. For example, the data processing unit 100 might control operation of the pump 3710 (e.g. setting control parameters) and receive therefrom information regarding the actual working conditions (such as output pressure, flow rate, etc. at an outlet of the pump). The data processing unit 100 might also control operation of the sampling unit 3730 (e.g. controlling sample injection or synchronization sample injection with operating conditions of the pump 3710). The separating device 3720 might also be controlled by the data processing unit 100 (e.g. selecting a specific flow path or column, setting operation temperature, etc.), and send - in return - information (e.g. operating conditions) to the data processing unit 100. Accordingly, the detector 3740 might be controlled by the data processing unit 100, and send information (e.g. about the detected sample compounds) to the data processing unit 100. The data processing unit 100 might also control operation of the fractionating unit 3750 (e.g. in conjunction with data received from the detector 3740) and provided data back.

In an alternative embodiment, the data processing unit 100 is arranged separately from the HPLC device 3700. In such an embodiment, the data processing unit 100 may be supplied with measurement data via a data interface 190.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A device (100) for processing a displayed multidimensional set of data (102) formed by a plurality of data items, the device (100) comprising
a pointer selection determining unit (104) adapted for determining a selected one of the plurality of data items presently selected by a pointer (106) operable by a user;
a processing action determining unit (108) adapted for determining a number of data item processing actions which are applicable for the selected data item and which can be selected by the user for processing the selected data item; and
a processing action display unit (110) adapted for displaying a selection area (112) having a number of selection segments (114 to 117) each selectable by the pointer (106) for activating a respective processing action,
wherein each of the selection segments (114 to 117) represents one of the determined number of data item processing actions,
the selection segments (114 to 117) are displayed with a spatial correlation between a respective processing action, represented by a respective one of the selection segments (114 to 117), and one of the data items corresponding to the respective processing action, by spatially correlating the position of the respective one of the selection segments (114 to 117) and a position of the one of the data items corresponding to the respective processing action.

2. The device (100) of claim 1,
wherein the processing action display unit (110) is adapted for displaying the selection segments (114 to 117) with a spatial correlation between a respective processing action, represented by a respective one of the selection segments (114 to 117), and the selected one of the data items, by spatially correlating the position of the respective one of the selection segments (114 to 117) and a position of the selected one of the data items.

3. The device (100) of claim 1 or 2,
wherein the processing action display unit (110) is adapted for marking, particularly for highlighting, a portion of the multidimensional set of data (102) which includes the selected data item upon moving the pointer (106) on one of the number of selection segments (114 to 117) which represents a processing action related to the marked portion.

4. The device (100) of claim 1 or any one of the above claims,
wherein the processing action display unit (110) is adapted for displaying a plaintext or an alphanumerical explanation of a processing action upon moving the pointer (106) on one of the number of selection segments (114 to 117) which represents the processing action.

5. The device (100) of claim 1 or any one of the above claims,
wherein the processing action display unit (110) is adapted for tracking the display of the selection area (112) in real time upon moving the pointer (106) to another data item of the displayed multidimensional set of data (102).

6. The device (100) of claim 1 or any one of the above claims,
wherein the processing actions comprise at least one of the group consisting of a baseline (122) estimation for the multidimensional set of data (102), a user-defined baseline (122) manipulation for the multidimensional set of data (102), a user-defined peak manipulation for the multidimensional set of data (102), a merging of peaks (124) of the multidimensional set of data (102), an integration over at least a part of the multidimensional set of data (102), an estimation of a separation between adjacent portions of the multidimensional set of data (102), and a peak (124) detection in the multidimensional set of data (102).

7. The device (100) of claim 1 or any one of the above claims,
comprising a processing action execution unit (138) adapted for executing an analysis action for at least a part of the displayed multidimensional set of data (102) upon selection of one of the selection segments (114 to 117) by the pointer (106).

8. The device (100) of claim 1 or any one of the above claims, wherein the processing action display unit (110) is adapted for at least one of:
displaying the selection segments (114 to 117) with a spatial correlation between a respective processing action represented by a respective one of the selection segments (114 to 117) and another one and/or the selected one of the data items;
displaying a selection area (112) being shaped as one of the group consisting of a segmented circle, a segmented oval, a segmented polygon, a segmented triangle, and a segmented square;
displaying the selection segments (114 to 117) tapering towards a central portion (118) of the selection area (112);
initiating the display of the selection area (112) upon detection that the pointer (106) approaches the displayed multidimensional set of data (102) up to less than a predefined threshold distance.

9. The device (100) of claim 1 or any one of the above claims, wherein the processing action determining unit (108) is adapted for at least one of:
determining only a number of feasible processing actions which can be selected subsequently by the user for processing the selected data item and which have a spatial correlation with the displayed multidimensional set of data (102);
determining the number of processing actions which can be selected subsequently by the user from a prestored list of processing actions having a spatial correlation to a multidimensional set of data (102);
determining a number of processing actions which cannot be selected subsequently by the user for processing the selected data item and is adapted to prevent the processing action display unit (110) from displaying these processing actions on the selection area (112).

10. The device (100) of claim 1 or any one of the above claims, comprising at least one of:
the selection segments (114 to 117) are displayable with a predefined spatial correlation on a display area (120) between a processing action represented by a respective one of the selection segments (114 to 117) and the displayed multidimensional set of data (102);
the pointer (106) is one of the group consisting of a cursor and a mouse pointer.

11. The device (100) of claim 1 or any one of the above claims, comprising at least one of:
an input unit (126, 128) adapted for being operable by the user for moving the pointer (106) on a display surface (120);
a display unit (130) for visually displaying the multidimensional set of data (102) and the selection area (112);
an attractor display unit (132) adapted for displaying an attractor on the displayed multidimensional set of data (102) when the pointer (106) is located apart from the displayed multidimensional set of data (102), wherein the attractor is located at a vertical projection of a present location of the pointer (106) onto the multidimensional set of data (102).

12. The device (100) of claim 1 or any one of the above claims, wherein the multidimensional set of data (102) comprises at least one of:
coupled liquid chromatography and mass spectroscopy data;
at least one of the group consisting of measurement data (102) and a baseline (122) fitted to measurement data (102);
at least one of the group consisting of measurement data (102) and a baseline (122) fitted to measurement data (102), wherein the measurement data (102) comprises at least one physical, chemical, and/or biological parameter of an analyte under examination;
at least one of the group consisting of measurement data (102) and a baseline (122) fitted to measurement data (102), wherein the measurement data (102) is provided by a measurement device (3700) which comprises at least one of a sensor device, a test device for testing a device under test or a substance, a device for chemical, biological and/or pharmaceutical analysis, a fluid separation system adapted for separating compounds of a fluid, a capillary electrophoresis device, a liquid chromatography device, a gas chromatography device, an electronic measurement device, and a mass spectroscopy device.

13. A method of processing a displayed multidimensional set of data (102) formed by a plurality of data items, the method comprising
determining a selected one of the plurality of data items presently selected by a pointer (106) operable by a user;
determining a number of data item processing actions which are applicable for the selected data item and which can be selected by the user for processing the selected data item;
displaying a selection area (112) having a number of selection segments (114 to 117) each selectable by the pointer (106) for activating a respective processing action, wherein each of the selection segments (114 to 117) represents one of the determined number of data item processing actions, wherein the selection segments (114 to 117) are displayed with a spatial correlation between a respective processing action represented by a respective one of the selection segments (114 to 117) and one of the data items corresponding to the respective processing action.

14. A software program or product, preferably stored on a data carrier, for controlling or executing the method of the preceding claim, when run on a data processing system (100) such as a computer.

## Patentansprüche

1. Einheit (100) zum Verarbeiten eines angezeigten mehrdimensionalen Datensatzes (102), der aus einer Vielzahl von Datenobjekten besteht, wobei die Einheit (100) aufweist:
eine Zeigerauswahl-Bestimmungseinheit (104) zum Bestimmen eines ausgewählten Datenobjekts aus der Vielzahl von Datenobjekten, das gerade durch einen benutzerbedienbaren Zeiger (106) ausgewählt wird;
eine Verarbeitungsaktionen-Bestimmungseinheit (108) zum Bestimmen einer Anzahl von Datenobjekt-Verarbeitungsaktionen, die für das ausgewählte Datenobjekt infrage kommen und durch den Benutzer zur Verarbeitung des ausgewählten Datenobjekts ausgewählt werden können; und
eine Verarbeitungsaktionen-Anzeigeeinheit (110) zum Anzeigen einer Auswahlfläche (112) mit einer Anzahl von Auswahlsegmenten (114 bis 117), die jeweils zum Auslösen einer bestimmten Verarbeitungsaktion durch den Zeiger (106) ausgewählt werden können,
wobei jedes der Auswahlsegmente (114 bis 117) eine aus der bestimmten Anzahl von Datenobjekt-Verarbeitungsaktionen darstellt,
die Auswahlsegmente (114 bis 117) jeweils in einer räumlichen Beziehung zu einer bestimmten Verarbeitungsaktion angezeigt werden, wobei die Beziehung durch jeweils eines der Auswahlsegmente (114 bis 117) und eines der zu der betreffenden Auswahlaktion gehörenden Datenobjekte dargestellt wird, indem die Position des jeweils einen Auswahlsegments (114 bis 117) und eine Position des einen zu der betreffenden Verarbeitungsaktion gehörenden Datenobjekts räumlich in Beziehung zueinander gesetzt werden.

2. Einheit (100) nach Anspruch 1,
wobei die Verarbeitungsaktionen-Anzeigeeinheit (110) zum Anzeigen der Auswahlsegmente (114 bis 117) in einer räumlichen Beziehung zu einer bestimmten Verarbeitungsaktion dient, die durch ein entsprechendes Auswahlsegment der Auswahlsegmente (114 bis 117) und das eine ausgewählte Datenobjekt dargestellt wird, indem die Position des entsprechenden Auswahlsegments der Auswahlsegmente (114 bis 117) und eine Position des einen ausgewählten Datenobjekts räumlich in Beziehung zueinander gesetzt werden.

3. Einheit (100) nach Anspruch 1 oder 2,
wobei die Verarbeitungsaktionen-Anzeigeeinheit (110) zum Markieren, insbesondere zum Hervorheben, eines Teils des mehrdimensionalen Datensatzes (102) dient, in welchem das ausgewählte Datenobjekt enthalten ist, wenn der Zeiger (106) auf eines aus der Anzahl von Auswahlsegmenten (114 bis 117) bewegt wird, das eine zu dem markierten Teil gehörende Verarbeitungsaktion darstellt.

4. Einheit (100) nach Anspruch 1 oder einem der vorhergehenden Ansprüche,
wobei die Verarbeitungsaktionen-Anzeigeeinheit (110) zum Anzeigen von Klartext oder einer alphanumerischen Erläuterung einer Verarbeitungsaktion dient, wenn der Zeiger (106) auf eines aus der Anzahl von Auswahlsegmenten (114 bis 117) verschoben wird, welches die Verarbeitungsaktion darstellt.

5. Einheit (100) nach Anspruch 1 oder einem der vorhergehenden Ansprüche,
wobei die Verarbeitungsaktionen-Anzeigeeinheit (110) zum Überwachen der Anzeige der Auswahlfläche (112) in Echtzeit dient, wenn der Zeiger (106) zu einem anderen Datenobjekt des angezeigten mehrdimensionalen Datensatzes (102) bewegt wird.

6. Einheit (100) nach Anspruch 1 oder einem der vorhergehenden Ansprüche, wobei die Verarbeitungsaktionen mindestens eine der folgenden Aktionen aufweisen: das Abschätzen einer Basislinie (122) für den mehrdimensionalen Datensatz (102), das Bearbeiten einer benutzerdefinierten Basislinie (122) für den mehrdimensionalen Datensatz (102), das Bearbeiten eines benutzerdefinierten Peak für den mehrdimensionalen Datensatz (102), das Zusammenfassen von Peaks (124) des mehrdimensionalen Datensatzes (102), das Integrieren über mindestens einen Teil des mehrdimensionalen Datensatzes (102), das Abschätzen des Abstands zwischen benachbarten Teilen des mehrdimensionalen Datensatzes (102) und das Erkennen von Peaks (124) im mehrdimensionalen Datensatz (102).

7. Einheit (100) nach Anspruch 1 oder einem der vorhergehenden Ansprüche,
die eine Verarbeitungsaktionen-Ausführungseinheit (138) aufweist, welche zum Ausführen einer Analyseaktion für mindestens einen Teil des dargestellten mehrdimensionalen Datensatzes (102) nach der Auswahl eines der Auswahlsegmente (114 bis 117) durch den Zeiger (106) dient.

8. Einheit (100) nach Anspruch 1 oder einem der vorhergehenden Ansprüche, wobei die Verarbeitungsaktionen-Anzeigeeinheit (110) zum Ausführen mindestens eines der folgenden Schritte dient:
Anzeigen der Auswahlsegmente (114 bis 117) in einer räumlichen Beziehung zwischen einer bestimmten Verarbeitungsaktion, die durch eines der Auswahlsegmente (114 bis 117) dargestellt wird, und einem anderen und/oder dem einen ausgewählten Datenobjekt;
Anzeigen einer Auswahlfläche (112) in einer der folgenden Formen: ein segmentierter Kreis, eine segmentierte Ellipse, ein segmentiertes Vieleck, ein segmentiertes Dreieck und ein segmentiertes Quadrat;
Anzeigen der Auswahlsegmente (114 bis 117), die auf einen mittleren Teil (118) der Auswahlfläche (112) spitz zulaufen;
Starten der Anzeige der Auswahlfläche (112), wenn erkannt wird, dass sich der Zeiger (106) bis auf weniger als einen vorgegebenen Schwellenwertabstand dem angezeigten mehrdimensionalen Datensatz (102) nähert.

9. Einheit (100) nach Anspruch 1 oder einem der vorhergehenden Ansprüche, wobei die Verarbeitungsaktionen-Bestimmungseinheit (108) zum Ausführen mindestens eines der folgenden Schritte dient:
Bestimmen lediglich einer Anzahl ausführbarer Verarbeitungsaktionen, die anschließend durch den Benutzer zum Verarbeiten des ausgewählten Datenobjekts ausgewählt werden können und in einer räumlichen Beziehung zu dem angezeigten mehrdimensionalen Datensatz (102) stehen;
Bestimmen der Anzahl von Verarbeitungsaktionen, die anschließend durch den Benutzer aus einer zuvor gespeicherten Liste von Verarbeitungsaktionen ausgewählt werden können und in einer räumlichen Beziehung zu einem mehrdimensionalen Datensatz (102) stehen;
Bestimmen einer Anzahl von Verarbeitungsaktionen, die anschließend nicht durch den Benutzer zum Verarbeiten des ausgewählten Datenobjekts ausgewählt werden können, damit die Verarbeitungsaktionen-Anzeigeeinheit (110) diese Verarbeitungsaktionen nicht auf der Auswahlfläche (112) anzeigen kann.

10. Einheit (100) nach Anspruch 1 oder einem der vorhergehenden Ansprüche, die mindestens eines der folgenden Merkmale aufweist:
die Auswahlsegmente (114 bis 117) können auf einer Anzeigefläche (120) in einer vorgegebenen räumlichen Beziehung zwischen einer durch ein bestimmtes Auswahlsegment der Auswahlsegmente (114 bis 117) dargestellten Verarbeitungsaktion und dem angezeigten mehrdimensionalen Datensatz (102) angezeigt werden;
als Zeiger (106) kommt ein Cursor oder ein Mauszeiger infrage.

11. Einheit (100) nach Anspruch 1 oder einem der vorhergehenden Ansprüche, die mindestens eines der folgenden Merkmale aufweist:
eine Eingabeeinheit (126, 128), die durch einen Benutzer bedient werden kann, um den Zeiger (106) auf einer Anzeigefläche (120) zu bewegen;
eine Anzeigeeinheit (130) zum visuellen Anzeigen des mehrdimensionalen Datensatzes (102) und der Auswahlfläche (112);
eine Attraktor-Anzeigeeinheit (132) zum Anzeigen eines Attraktors auf dem angezeigten mehrdimensionalen Datensatz (102), wenn sich der Zeiger (106) abseits des angezeigten mehrdimensionalen Datensatzes (102) befindet, wobei sich der Attraktor an einem vertikalen Projektionspunkt von einem aktuellen Standort des Zeigers (106) auf den mehrdimensionalen Datensatz (102) befindet.

12. Einheit (100) nach Anspruch 1 oder einem der vorhergehenden Ansprüche, wobei der mehrdimensionale Datensatz (102) mindestens eines der folgenden Merkmale aufweist:
verbundene flüssigkeitschromatographische und massenspektrometrische Daten;
Messdaten (102) und/oder eine an Messdaten (102) angepasste Basislinie (122);
Messdaten (102) und/oder eine an Messdaten (102) angepasste Basislinie (122), wobei die Messdaten (102) mindestens einen physikalischen, chemischen und/oder biologischen Parameter eines untersuchten Analyten aufweisen;
Messdaten (102) und/oder eine an Messdaten (102) angepasste Basislinie (122), wobei die Messdaten (102) durch eine Messeinheit (3700) bereitgestellt werden, die mindestens eine der folgenden Einheiten aufweist: eine Sensoreinheit, eine Testeinheit zum Testen einer zu testenden Einheit oder Substanz, eine Einheit zur chemischen, biologischen und/oder pharmazeutischen Analyse, ein Fluidtrennungssystem zum Trennen der Verbindungen eines Fluids, eine Kapillarelektrophoreseeinheit, eine Flüssigkeitschromatographieeinheit, eine Gaschromatographieeinheit, eine elektronische Messeinheit, eine Massenspektrometrieeinheit.

13. Verfahren zum Verarbeiten eines angezeigten, aus einer Vielzahl von Datenobjekten bestehenden, mehrdimensionalen Datensatzes (102), wobei das Verfahren die folgenden Schritte aufweist:
Bestimmen eines ausgewählten Datenobjekts aus der Vielzahl von Datenobjekten, das gerade durch einen benutzerbedienbaren Zeiger (106) ausgewählt wird;
Bestimmen einer Anzahl von Datenobjekt-Verarbeitungsaktionen, die mit dem ausgewählten Datenobjekt ausgeführt und durch den Benutzer zum Verarbeiten des ausgewählten Datenobjekts ausgewählt werden können;
Anzeigen einer Auswahlfläche (112) mit einer Anzahl von Auswahlsegmenten (114 bis 117), die jeweils zum Auslösen einer bestimmten Verarbeitungsaktion durch den Zeiger (106) ausgewählt werden können, wobei jedes der Auswahlsegmente (114 bis 117) eine Verarbeitungsaktion aus der bestimmten Anzahl von Datenobjekt-Verarbeitungsaktionen darstellt und die Auswahlsegmente (114 bis 117) in einer räumlichen Beziehung zu einer bestimmten Verarbeitungsaktion, die durch ein bestimmtes Auswahlsegment der Auswahlsegmente (114 bis 117) dargestellt wird, und einem der zu der betreffenden Verarbeitungsaktion gehörenden Datenobjekte angezeigt werden.

14. Softwareprogramm oder -produkt, das vorzugsweise auf einem Datenträger gespeichert ist, zum Steuern oder Ausführen des Verfahrens nach dem vorhergehenden Anspruch, wenn dieses auf einem Datenverarbeitungssystem (100) wie beispielsweise einem Computer ausgeführt wird.

## Revendications

1. Dispositif (100) pour traiter un jeu multidimensionnel affiché de données (102) formé d'une pluralité d'éléments de données, le dispositif (100) comprenant
une unité de détermination de sélection par pointeur (104) à même de déterminer un élément sélectionné parmi la pluralité d'éléments de données sélectionnés à cet instant par un pointeur (106) actionnable par un utilisateur ;
une unité de détermination d'action de traitement (108) à même de déterminer un certain nombre d'actions de traitement d'élément de données qui sont applicables pour l'élément de données sélectionné et qui peuvent être sélectionnées par l'utilisateur pour traiter l'élément de données sélectionné, et
une unité d'affichage d'action de traitement (110) à même d'afficher une zone de sélection (112) comportant un certain nombre de segments de sélection (114 à 117), chacun étant sélectionnable par le pointeur (106) pour activer une action de traitement respective ;
dans lequel chacun des segments de sélection (114 à 117) représente une action parmi le nombre déterminé d'actions de traitement d'élément de données ;
les segments de sélection (114 à 117) sont affichés avec une corrélation spatiale entre une action de traitement respective, représentée par un segment respectif parmi les segments de sélection (114 à 117), et un des éléments de données correspondant à l'action de traitement respective, en corrélant dans l'espace la position du segment respectif parmi les segments de sélection (114 à 117) et une position de l'élément parmi les éléments de données correspondant à l'action de traitement respective.

2. Dispositif (100) suivant la revendication 1,
dans lequel l'unité d'affichage d'action de traitement (110) est à même d'afficher les segments de sélection (114 à 117) avec une corrélation spatiale entre une action de traitement respective, représentée par un segment respectif des segments de sélection (114 à 117), et l'élément sélectionné parmi les éléments de données, en corrélant dans l'espace la position du segment respectif parmi les segments de sélection (114 à 117) et une position de l'élément sélectionné parmi les éléments de données.

3. Dispositif (100) suivant la revendication 1 ou 2,
dans lequel l'unité d'affichage d'action de traitement (110) est à même de marquer, en particulier de mettre en évidence, une partie du jeu multidimensionnel de données (102) qui inclut l'élément de données sélectionné lors du déplacement du pointeur (106) sur un segment parmi le nombre de segments de sélection (114 à 117) qui représente une action de traitement liée à la partie marquée.

4. Dispositif (100) suivant la revendication 1 ou suivant l'une quelconque des revendications précédentes,
dans lequel l'unité d'affichage d'action de traitement (110) est à même d'afficher un texte en clair ou une explication alphanumérique d'une action de traitement lors du déplacement du pointeur (106) sur un segment parmi le nombre de segments de sélection (114 à 117) qui représente l'action de traitement.

5. Dispositif (100) suivant la revendication 1 ou suivant l'une quelconque des revendications précédentes,
dans lequel l'unité d'affichage d'action de traitement (110) est à même de suivre en temps réel l'affichage de la zone de sélection (112) lors du déplacement du pointeur (106) vers un autre élément de données du jeu multidimensionnel affiché de données (102).

6. Dispositif (100) suivant la revendication 1 ou suivant l'une quelconque des revendications précédentes,
dans lequel les actions de traitement comprennent au moins un élément du groupe comprenant une estimation de base (122) pour le jeu multidimensionnel de données (102), une manipulation de base définie par l'utilisateur (122) pour le jeu multidimensionnel de données (102), une manipulation de valeur maximale définie par l'utilisateur pour le jeu multidimensionnel de données (102), une fusion de valeurs maximales (124) du jeu multidimensionnel de données (102), une intégration sur au moins une partie du jeu multidimensionnel de données (102), une estimation d'une séparation entre des parties adjacentes du jeu multidimensionnel de données (102) et une détection de valeur maximale (124) dans le jeu multidimensionnel de données (102).

7. Dispositif (100) suivant la revendication 1 ou suivant l'une quelconque des revendications précédentes,
comprenant une unité d'exécution d'action de traitement (138) à même d'exécuter une action d'analyse pour au moins une partie du jeu multidimensionnel affiché de données (102) lors de la sélection d'un segment parmi les segments de sélection (114 à 117) par le pointeur (106).

8. Dispositif (100) suivant la revendication 1 ou suivant l'une quelconque des revendications précédentes, dans lequel l'unité d'affichage d'action de traitement (110) est à même d'exécuter au moins une des étapes suivantes :
l'affichage des segments de sélection (114 à 117) avec une corrélation spatiale entre une action de traitement respective représentée par un segment respectif parmi les segments de sélection (114 à 117) et un autre élément et/ou l'élément sélectionné parmi les éléments de données ;
l'affichage d'une zone de sélection (112) se présentant sous la forme d'un élément du groupe comprenant un cercle segmenté, un ovale segmenté, un polygone segmenté, un triangle segmenté et un carré segmenté ;
l'affichage des segments de sélection (114 à 117) s'évasant vers une partie centrale (118) de la zone de sélection (112) ;
le lancement de l'affichage de la zone de sélection (112) lors de la détection que le pointeur (106) approche du jeu multidimensionnel affiché de données (102) de moins d'une distance limite prédéfinie.

9. Dispositif (100) suivant la revendication 1 ou suivant l'une quelconque des revendications précédentes, dans lequel l'unité de détermination d'action de traitement (108) est à même d'exécuter au moins une des étapes suivantes :
la détermination d'un certain nombre d'actions de traitement faisables uniquement qui peuvent être sélectionnées par la suite par l'utilisateur pour traiter l'élément de données sélectionné et qui ont une corrélation spatiale avec le jeu multidimensionnel affiché de données (102) ;
la détermination du nombre d'actions de traitement qui peuvent être sélectionnées par la suite par l'utilisateur parmi une liste préenregistrée d'actions de traitement présentant une corrélation spatiale avec un jeu multidimensionnel de données (102) ;
la détermination d'un certain nombre d'actions de traitement qui ne peuvent être sélectionnées par la suite par l'utilisateur pour traiter l'élément de données sélectionné et à même d'empêcher l'unité d'affichage d'action de traitement (110) d'afficher ces actions de traitement sur la zone de sélection (112).

10. Dispositif (100) suivant la revendication 1 ou suivant l'une quelconque des revendications précédentes, comprenant au moins une des caractéristiques suivantes :
les segments de sélection (114 à 117) sont affichables avec une corrélation spatiale prédéfinie sur une zone d'affichage (120) entre une action de traitement représentée par un segment respectif des segments de sélection (114 à 117) et le jeu multidimensionnel affiché de données (102) ;
le pointeur (106) est un élément du groupe comprenant un curseur et un pointeur de souris.

11. Dispositif (100) suivant la revendication 1 ou suivant l'une quelconque des revendications précédentes, comprenant au moins une des unités suivantes :
une unité d'entrée (126, 128) à même d'être actionnée par l'utilisateur pour déplacer le pointeur (106) sur une surface d'affichage (120) ;
une unité d'affichage (130) pour afficher visuellement le jeu multidimensionnel de données (102) et la zone de sélection (112) ;
une unité d'affichage d'attracteur (132) à même d'afficher un attracteur sur le jeu multidimensionnel affiché de données (102) lorsque le pointeur (106) est situé à l'écart du jeu multidimensionnel affiché de données (102), dans lequel l'attracteur est situé au niveau d'une projection verticale d'un emplacement à cet instant du pointeur (106) sur le jeu multidimensionnel de données (102).

12. Dispositif (100) suivant la revendication 1 ou suivant l'une quelconque des revendications précédentes, dans lequel le jeu multidimensionnel de données (102) comprend au moins une des caractéristiques suivantes :
des données obtenues par chromatographie en phase liquide et spectroscopie de masse couplées ;
au moins des données du groupe comprenant des données de mesure (102) et une base (122) adaptée à des données de mesure (102) ;
au moins des données du groupe comprenant des données de mesure (102) et une base (122) adaptée à des données de mesure (102), dans lequel les données de mesure (102) comprennent au moins un paramètre physique, chimique et/ou biologique d'un analyte en cours d'examen ;
au moins des données du groupe comprenant des données de mesure (102) et une base (122) adaptée à des données de mesure (102), dans lequel les données de mesure (102) sont fournies par un dispositif de mesure (3700) qui comprend au moins un capteur, un dispositif de test pour tester un dispositif en test ou une substance, un dispositif d'analyse chimique, biologique et/ou pharmaceutique, un système de séparation de fluide à même de séparer les composés d'un fluide, un dispositif d'électrophorèse capillaire, un dispositif de chromatographie en phase liquide, un dispositif de chromatographie en phase gazeuse, un dispositif de mesure électronique et/ou un dispositif de spectroscopie de masse.

13. Procédé de traitement d'un jeu multidimensionnel affiché de données (102) formé d'une pluralité d'éléments de données, le procédé comprenant
la détermination d'un élément sélectionné parmi la pluralité d'éléments de données sélectionnés à cet instant par un pointeur (106) actionnable par un utilisateur ;
la détermination d'un certain nombre d'actions de traitement d'élément de données qui sont applicables pour l'élément de données sélectionné et qui peuvent être sélectionnées par l'utilisateur pour traiter l'élément de données sélectionné ;
l'affichage d'une zone de sélection (112) comportant un certain nombre de segments de sélection (114 à 117), chacun étant sélectionnable par le pointeur (106) pour activer une action de traitement respective, dans lequel chacun des segments de sélection (114 à 117) représente une action parmi le nombre déterminé d'actions de traitement d'élément de données, dans lequel les segments de sélection (114 à 117) sont affichés avec une corrélation spatiale entre une action de traitement respective représentée par un segment respectif parmi les segments de sélection (114 à 117) et un des éléments de données correspondant à l'action de traitement respective.

14. Programme ou produit logiciel, de préférence stocké sur un support de données, pour commander ou exécuter le procédé suivant la revendication précédente, lorsqu'il est exécuté sur un système de traitement de données (100) tel qu'un ordinateur.
